# EUROPÄISCHE PATENTANMELDUNG

(11) **EP 2 546 545 A2**
(43) Veröffentlichungstag der Anmeldung: **16.01.2013**
(21) Anmeldenummer: 12004651.1
(22) Anmeldetag: 21.06.2012
(51) Int. Cl.: F16G 11/10, B66D 3/00

(54) **Vorrichtung zum Befestigen eines Zugelementes, insbesondere eines Zugseils**

(30) Priorität: 13.07.2011 CH 11802011
(71) Anmelder: Fatzer AG Drahtseilfabrik, 8590 Romanshorn (CH)
(72) Erfinder: Rikli, Christian, CH-3626 Hünibach (CH)
(74) Vertreter: Luchs, Willi

(57) **Zusammenfassung**

Die Vorrichtung (1) besteht aus einer Anzahl von in einem rohrförmigen Gehäuse (3) in Achsenrichtung des Zugelementes (7) hintereinanderliegend angeordneten Klemmeinheiten (2a bis 2f) mit radial zur Achsenrichtung des Zugelements ausgerichteten Haltern (8) mit Klemmbacken (9), die kreisförmig das Zugelement gleichmässig umfassend verteilt sind und mit gleichzeitig auf alle Klemmbacken wirkende Betätigungsmitteln (17') versehen sind. Die Klemmbacken (9) sind auf den Haltern (8) in Achsrichtung des Zugelementes (7) verschiebbar. Daraus resultiert eine umfänglich gleichmässige, grossflächige sowie schlupffreie und auf das Zugelement schonende Klemmwirkung.

## Beschreibung

Die Erfindung betrifft eine Vorrichtung zum Befestigen eines dehnbaren Zugelementes, insbesondere eines Zugseils, die mit quer zur Achse des Zugelements gegeneinander bewegbaren Halterns und auf diesen in Achsenrichtung des Zugelements verschiebbaren Klemmbacken mit Eingriffsflächen für das Zugelement versehen ist.

Vorrichtungen dieser Art werden unter anderem zum Spannen, Vorrecken und Montieren von Stahlseilen in Tragstrukturen von grossflächigen

Dächern, Hängebrücken und Seilbahnen eingesetzt. Die dafür verwendeten Stahlseile haben in der Regel einen verhältnismässig grossen Durchmesser und sind auch grossen Zugkräften ausgesetzt.

Eine Vorrichtung dieser Art ist in der EP-A-1 082 552 geoffenbart. Die dort beschriebene Vorrichtung zeichnet sich dadurch aus, dass sie durch die Längsbewegung der Klemmbacken in ihren Haltern die Dehnung des Tragseils innerhalb der Vorrichtung kompensiert. Dadurch entsteht beim Spannen oder Ziehen kein Seilschlupf des Tragseils. Dies hat auf das Tragseil einen das Seilmaterial schonenden Effekt. Nachteilig ist aber bei dieser Vorrichtung, dass die Klemmbacken auf das Tragseil nur im Bereich einer Diametralebene des Seils voll wirksam sind. Quer zu dieser Ebene ist die Klemmwirkung mangelhaft, vor allem bei stärkeren Tragseilen.

Der Erfindung liegt die Aufgabe zugrunde, diese Nachteile zu vermeiden und eine Vorrichtung der eingangs genannten Art zu schaffen, die auch bei Zugelementen mit grossen Durchmessern und hohen Zugkräften eine schlupffreie und auf das Zugelement schonende Klemmwirkung gewährleistet.

Diese Aufgabe wird erfindungsgemäss dadurch gelöst, dass die Halter mit den Klemmbacken radial zur Achse des Zugelements ausgerichtet und gleichmässig um das zu klemmende Zugelement verteilt sind.

Diese Anordnung erzeugt eine rundum gleichmässige Klemmwirkung, unabhängig vom Durchmesser des Zugelementes sowie von dessen eventuell unkalibriertem Querschnitt. Es ist in diesem Sinne besonders vorteilhaft, wenn in der Ebene quer zur Achse des Zugelementes Anzahl und Breite der Klemmbacken erfindungsgemäss so gewählt sind, dass die Klemmbacken das Zugelement nahezu vollumfänglich umfassen können.

Bei einer besonders vorteilhaften Ausführungsform sieht die Erfindung vor, dass sich die Vorrichtung aus einer Anzahl von in Achsenrichtung des Zugelementes hintereinanderliegend angeordnet und gleich ausgebildeten Klemmeinheiten mit eigenen Haltern und Klemmbacken sowie mit vorzugsweise in allen Einheiten gleichzeitig wirkenden Betätigungsmitteln zusammensetzt.

Die Klemmeinheiten weisen zweckmässigerweise diametral angeordnete Halter mit je zwei gegenüberliegenden Keilen auf, die relativ zueinander auf in Zugrichtung gegeneinander konvergierenden Gleitflächen verschiebbar sind. Um die Haftreibung zwischen den Gleitflächen zu minimieren, ist es erfindungsgemäss vorgesehen, dass diese durch die Rollflächen eines zwischen den Keilen angeordneten Rollenlagers gebildet sind.

Die Erfindung sieht weiterhin vor, dass die Klemmeinheiten übereinanderliegend in einem rohrförmigen Gehäuse mit einem Betätigungsflansch angeordnet sind, wobei die aussenliegenden Keile am rohrförmigen Gehäuse befestigt sind, während die innenliegenden Keile durch ein koaxiales Innenrohr geführt sind, durch welches sie alle gleichzeitig in Achsenrichtung des Zugelements betätigbar sind.

Die Klemmvorrichtung erhält damit einen robusten und kompakten Aufbau, in dem die Klemmeinheiten einschliesslich ihrer inneren Betätigungselemente gut geschützt sind.

Alternativ dazu können die Klemmeinheiten mit je einem eigenen Innenrohr mit ebenfalls eigenen Betätigungselementen als integrale Bestandteile der jeweiligen Klemmeinheit versehen sein. Dadurch wird der Zusammenbau der Vorrichtung vereinfacht.

Es ist ferner vorgesehen, dass die Klemmbacken in den innenliegenden Keilen in Achsenrichtung des Zugelements verschiebbar sind, wobei die Verschiebbarkeit durch Anschlagflächen der innenliegenden Keile begrenzt ist. Auf diese Weise wird die Längendehnung des Zugelementes durch die Längsbewegung der Klemmbacken kompensiert.

Zwecks einer das Zugelement schonenden Klemmwirkung ist es auch vorteilhaft vorgesehen, dass die Klemmbacken mit koaxialen zum Zugelement leicht abgerundeten Einlagen versehen sind, deren Material an den Kontaktflächen weicher ist als das des Zugelementes in seinem peripherischen Bereich.

Zweckmässigerweise sind als Betätigungselemente Hydraulikzylinder vorgesehen, die an das Innenrohr respektive die Innenrohre und den Betätigungsflansch des rohrförmigen Gehäuses koppelbar sind und in bzw. gegen die Zugrichtung des Zugelements wirksam sind. In der Variante mit einteiligem Innenrohr sind die Hydraulikzylinder auf einer stirnseitigen Halterung des rohrförmigen Gehäuses abgestützt. In der Variante mit einzelnen Innenrohren stützen sie sich auf benachbarten Haltern der jeweiligen Einheit. Die Hydraulikzylinder zum Betätigen des Gehäuses sind ihrerseits verankert in einem Fundament oder einem externen Stützlager.

Ausführungsbeispiele der Erfindung sowie weitere Vorteile derselben sind nachfolgend anhand der Zeichnung näher erläutert. Es zeigen:
- Fig. 1: eine erfindungsgemässe Seilklemme, in der Vorderansicht dargestellt,
- Fig. 2: einen Längsschnitt entlang der Linie II-II in Fig. 1,
- Fig. 3: die Seilklemmte aus Fig. 1, im Grundriss dargestellt,
- Fig. 4: Die Seilklemme aus Fig. 1, perspektivisch dargestellt,
- Fig. 5: die Seilklemme aus Fig. 1, im zusammengebauten Zustand und ebenfalls perspektivisch dargestellt,
- Fig. 6,: eine Variante der Seilklemme aus Fig. 1, teilweise im Schnitt und perspektivisch dargestellt,
- Fig. 7: eine Klemmeinheit der Seilklemme aus Fig. 6, im Längsschnitt dargestellt,
- Fig. 8: die Klemmeinheit aus Fig. 7, im Querschnitt dargestellt, und
- Fig. 9: die Klemmeinheit aus Fig. 7 im ausgebauten Zustand, perspektivisch dargestellt.

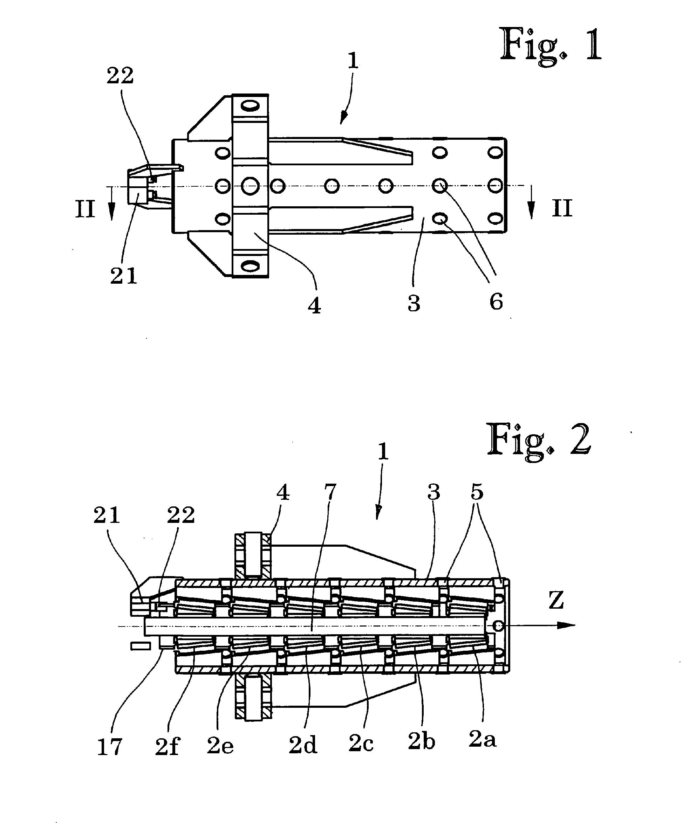

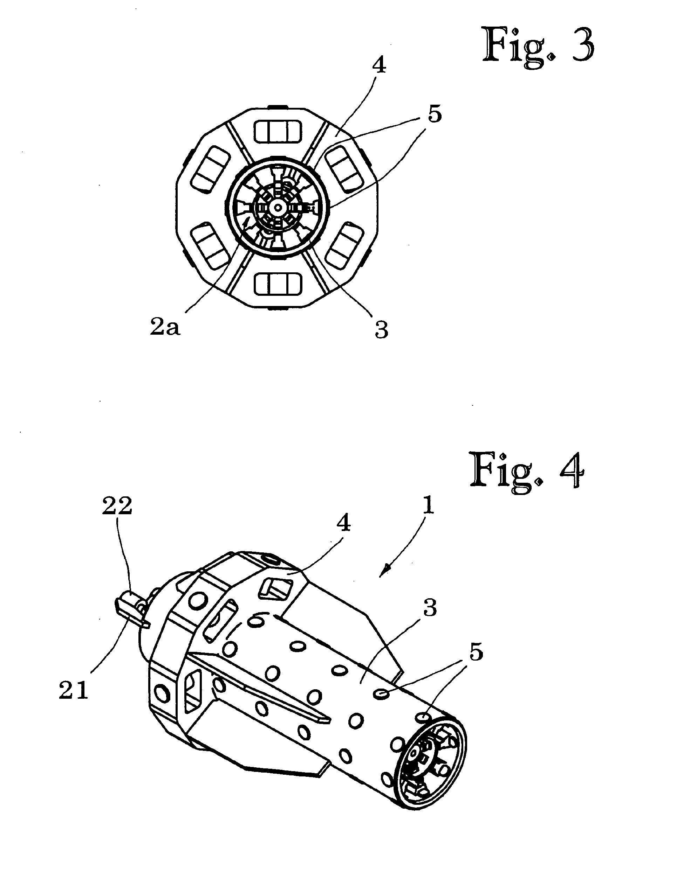

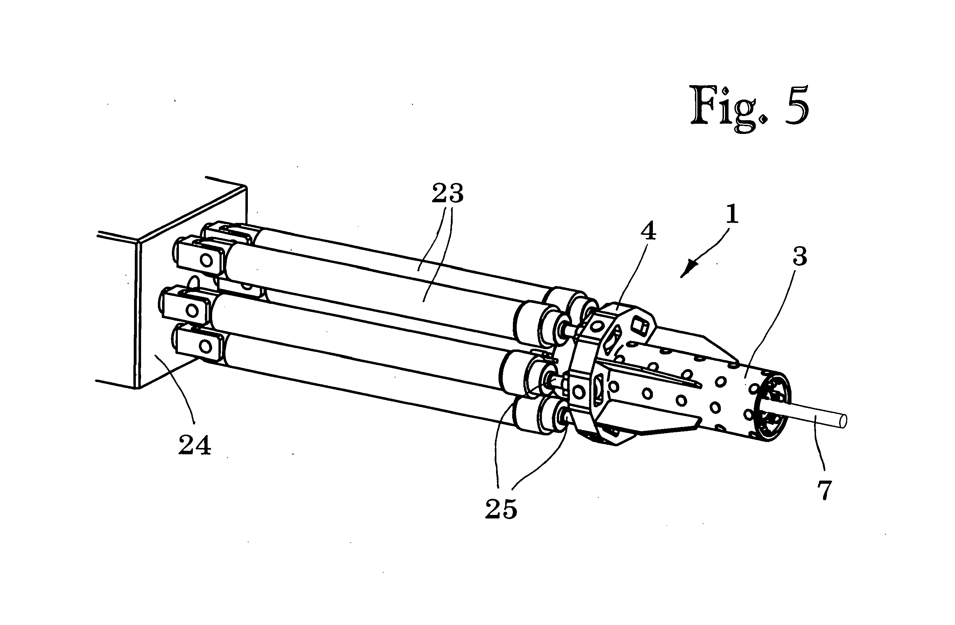

Die Vorrichtung 1 nach Fig. 1 bis Fig. 5 besteht aus sechs gleich ausgebildeten Klemmeinheiten 2a bis 2f, die hintereinanderliegend in einem rohrförmigen Gehäuse 3 mit einem Betätigungsflansch 4 eingebaut sind. Die Klemmeinheiten 2a bis 2f sind im Gehäuse 3 mit Bolzen 5 befestigt, die durch Bohrungen 6 des Gehäuses 3 eingesteckt sind. In der Vorrichtung 1 ist ein Stahlseil 7 festgeklemmt, auf das in Richtung der Seilachse eine Zugkraft Z wirksam ist.

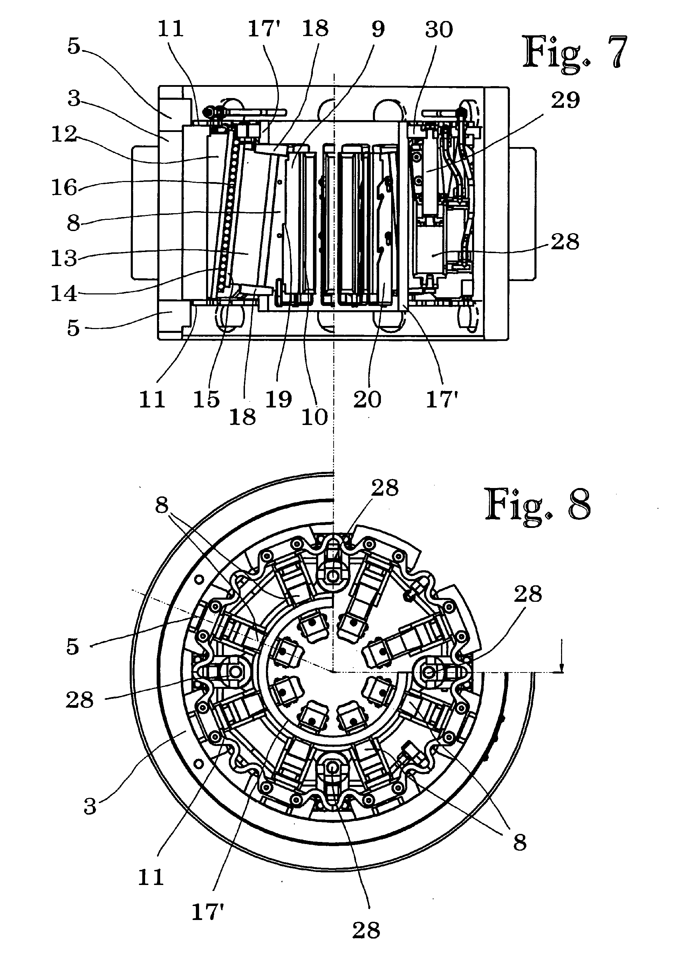

Die Klemmeinheiten 2a bis 2f sind grundsätzlich so ausgebildet, wie diese in Fig. 7 bis Fig. 9 veranschaulicht sind. Es ist daraus ersichtlich, dass dieselben aus einer Reihe von quer zur Achsenrichtung des Seils 7 gegeneinander bewegbaren Haltern 8 mit Klemmbacken 9 bestehen, die vorderseitig Eingriffsflächen 10 für das Seil aufweisen und in Achsenrichtung des Seils verschiebbar sind. Die Halter 8 mit den Klemmbacken 9 sind im Gehäuse radial zur Seilachse ausgerichtet und dort in der Ebene quer zur Seilachse so verteilt, dass sie das Seil 7 gleichmässig weitgehend vollumfänglich umfassen können. Die Halter 8 sind umfänglich mit Distanzelementen 11 positioniert, die stirnseitig an je zwei benachbarten Haltern angeschraubt sind.

Zum Anpressen der Klemmbacken 9 gegen das Seil 7 weisen die Halter 8 je zwei gegenüberliegende Keilstücke 12, 13 auf, deren Gleitflächen 14 bzw. 15 in Zugrichtung Z des Seiles 7 konvergieren. Zwischen den Keilstücken 12 und 13 ist ein Rollenlager 16 eingebaut, das die Haftreibung zwischen den Keilstücken 12 und 13 herabsetzt.

Die Bolzen 5 fixieren die aussenliegenden Keilstücke 12 In die Innenwand des rohrförmigen Gehäuses. Die innenliegenden Keilstücke 13 sind ihrerseits durch ein Innenrohr 17 geführt, das sich bei der Vorrichtung 1 nach Fig. 1 bis Fig. 5 in Achsenrichtung des Seils 7 durch alle Klemmeinheiten 2a bis 2f hindurchstreckt. Zwischen dem Innenrohr 17 und den Keilstücken 13 sind Stützkörper 18 mit rohrseitig ebenen Stützflächen angeordnet.

Die Klemmbacken 9 sind in den innenliegenden Keilstücken 13 in Achsrichtung des Seils 7 verschiebbar, um die beim Klemmvorgang auftretende Längendehnung des Seils zu kompensieren. Ihre Verschiebbarkeit ist durch Anschlagflächen 19 und Haltebügel 20 der Keilstücke 13 begrenzbar.

Am unteren Ende des rohrförmigen Gehäuses 3 befindet sich ein Lagerbock 21 mit mehreren umfänglich verteilt angeordneten Hydraulikzylindern 22, deren Kolbenstangen am einteiligen Innenrohr 17 befestigt sind. Bei Beaufschlagung der Hydraulikzylinder 22 wird das Innenrohr 17 in Zugrichtung Z des Seils 7 angeschoben und verschiebt damit die innenliegenden Keilstücke 13 gegen die aussenliegenden Keilstücke 12 gleichzeitig in sämtlichen Klemmeinheiten der Vorrichtung.

Andererseits wird das rohrförmige Gehäuse 3 gegen die Zugrichtung Z des Seils 7 durch mehrere Hydraulikzylinder 23 beansprucht, die in einem externen Halter oder Fundament 24 verankert sind und deren Kolbenstangen 25 am Betätigungsflansch 4 des Gehäuses 3 mit Querbolzen 26 befestigt sind. Das Gehäuse 3 überträgt die Beanspruchung auf die aussenliegenden Keilstücke.

Bei Beaufschlagung der Hydraulikzylinder 22 und 23 werden die Keilstücke 12 und 13 gegeneinander verschoben, und die Klemmbacken 9 werden in radialer Richtung gegen das Seil 7 angedrückt. Daraus resultiert eine umfängliche gleichmässige, grossflächige und das Zugseil schonende Klemmwirkung. Um diesen Effekt zu verstärken, haben die Klemmbacken Einlagen mit leicht abgerundeten Eingriffsflächen 10, deren Krümmung mit der des Seilumfangs korrespondiert. Dementsprechend wird auch das Material für die Einlagen ausgewählt, nämlich abhängig von den Materialeigenschaften des Zugseils.

Die Verschiebbarkeit der Klemmbacken 9 in den sie tragenden Keilstücken 13 ermöglicht es, die beim Klemmvorgang auftretende Längendehnung des Zugseils zu kompensieren, so dass das Seil entlang der Seilklemme nicht durch die Klemmbacken hindurchschlupft und keine sonst daraus entstehende Beschädigung erfährt.

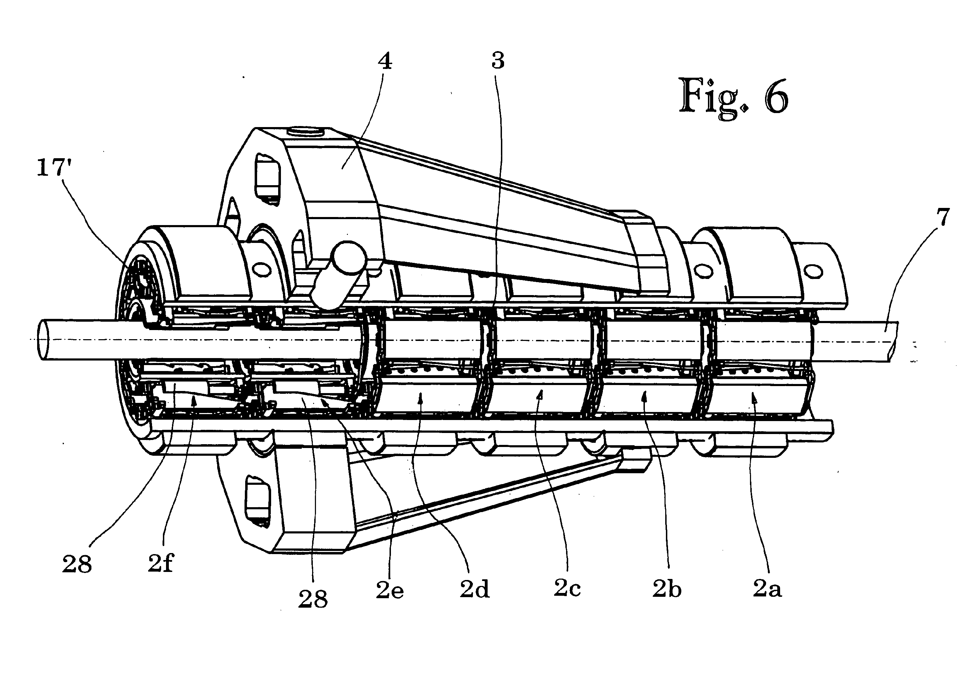

Die Vorrichtung nach Fig. 6 bis Fig. 9 unterscheidet sich von den nach Fig. 1 bis Fig. 5 im wesentlichen nur dadurch, dass bei ihr jede Klemmeinheit 2a bis 2f mit eigenen Betätigungsmitteln für die innenliegenden Keilstücke 13 versehen ist. Wie insbesondere aus Fig. 7 und Fig. 8 ersichtlich, sind hier als Betätigungsmittel einzelne Innenrohre 17' vorgesehen, auf welche je vier umfänglich verteilt angeordnete Hydraulikzylinder 28 wirksam sind. Letztere sind auf je zwei benachbarten Haltern 8 abgestützt, während ihre Kolbenstangen 29 an Flanschen 30 des jeweiligen Innenrohrs 17' befestigt sind. Die Beaufschlagung der Hydraulikzylinder 28 erfolgt synchron in allen Klemmeinheiten der Vorrichtung. Dadurch werden alle Klemmbacken gleichzeitig angedrückt. Es ist aber ebenfalls möglich, die Beaufschlagung der Hydraulikzylinder 28 so zu steuern, dass die Beaufschlagung schrittweise von Klemmeinheit zu Klemmeinheit erfolgt, so dass ihre Klemmbacken das Seil 7 nacheinander umklemmen können.

Durch die Verteilung der Klemmbacken auf mehrere Einheiten sind die Keilpaare 12, 13 wesentlich kleiner als bei Seilklemmen mit nur einem einzigen Keilpaar.

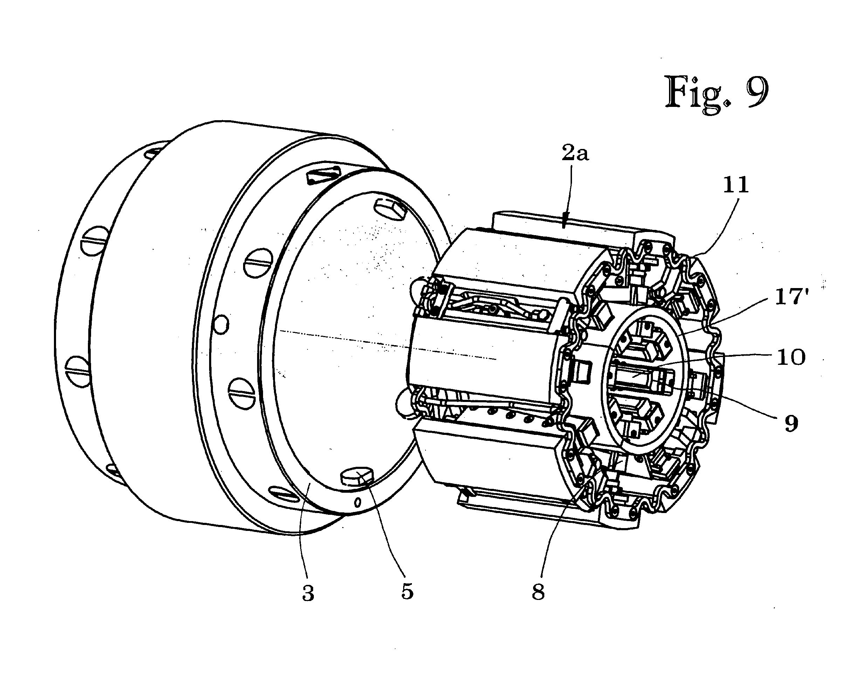

Wie insbesondere aus Fig. 9 ersichtlich, hat die dort dargestellte Variante auch den Vorteil, dass die einzelnen Klemmeinheiten nacheinander in das rohrförmige Gehäuse 3 als selbständige Baueinheiten einbaubar sind. Dadurch wird der Zusammenbau der Vorrichtung sehr erleichtert.

Die Klemmeinheit nach Fig. 7 bis Fig. 9 kann auch allein als selbständige Vorrichtung zum Befestigen, Spannen oder Ziehen eines Zugseils eingesetzt werden, sofern die von ihr erzeugten Klemmkräfte zum schlupffreien Festspannen des Seils ausreichend sind.

Die Erfindung ist mit den oben erläuterten Ausführungsbeispielen ausreichend dargetan. Diese erfindungsgemässe Vorrichtung könnte aber in einer in Längsrichtung zum Seil aufklappbaren Ausführung konzipiert sein, damit das Seil nicht aus der Klemmvorrichtung ausgefädelt werden muss. Hierbei wäre das Gehäuse und die Klemmeinheiten der Vorrichtung beispielsweise in zwei halbschalenförmige Hälften geteilt und auf der einen oder beiden Aussenseiten des Gehäuses vorzugsweise Scharniere für das Aufklappen bzw. Verschliessen desselben vorgesehen.

## Patentansprüche

1. Vorrichtung zum Befestigen eines dehnbaren Zugelementes (7), insbesondere eines Zugseils, die mit quer zur Achse des Zugelementes gegeneinander bewegbaren Haltern (8) und auf diesen in Achsrichtung des Zugelementes verschiebbaren Klemmbacken (9) mit Eingriffsflächen (10) für das Zugelement versehen ist,
**dadurch gekennzeichnet, dass**
die Halter (8) mit den Klemmbacken (9) radial zur Achse des Zugelementes (7) ausgerichtet und vorzugsweise gleichmässig um das zu klemmende Zugelement verteilt sind.

2. Vorrichtung nach Anspruch 1, **dadurch gekennzeichnet, dass** in der Ebene quer zur Achse des Zugelementes (7) Anzahl und Breite der Klemmbacken (9) so gewählt sind, dass die Klemmbacken das Zugelement (7) nahezu vollumfänglich umfassen können.

3. Vorrichtung nach Anspruch 1 oder 2, **dadurch gekennzeichnet, dass**
sie sich aus einer Anzahl von in Achsenrichtung des Zugelementes (7) hintereinanderliegend angeordneten und gleich ausgebildeten Klemmeinheiten (2a bis 2f) mit eigenen Haltern (8) und Klemmbacken (9) sowie vorzugsweise in allen Klemmeinheiten gleichzeitig wirkenden Betätigungsmitteln (17, 17') zusammensetzt.

4. Vorrichtung nach Anspruch 3, **dadurch gekennzeichnet, dass** die Klemmeinheiten (2a bis 2f) diametral angeordnete Halter (8) mit je zwei gegenüberliegenden Keilen (12, 13) aufweist, die relativ zueinander auf in Zugrichtung (Z) gegeneinander konvergierenden Gleitflächen (14, 15) verschiebbar sind.

5. Vorrichtung nach Anspruch 4, **dadurch gekennzeichnet, dass** die Gleitflächen (14, 15) durch die Rollflächen eines zwischen den Keilern (12, 13) angeordneten Rollenlagers (16) gebildet sind.

6. Vorrichtung nach einem der Ansprüche 3 bis 5, **dadurch gekennzeichnet, dass**
die Klemmeinheiten (2a bis 2f) übereinanderliegend in einem rohrförmigen Gehäuse (3) mit einem Betätigungsflansch (4) angeordnet sind, wobei die aussenliegenden Keile (12) am rohrförmigen Gehäuse (3) befestigt sind, während die innenliegenden Keile (13) durch ein koaxiales Innenrohr (17, 17') geführt sind, durch welches sie alle gleichzeitig in Achsrichtung des Zugelements (7) betätigbar sind.

7. Vorrichtung nach Anspruch 6, **dadurch gekennzeichnet, dass** die Klemmeinheiten (2a bis 2f) je ein eigenes Innenrohr (17') mit eigenen Betätigungselementen (28) als integrale Bestandteile der jeweiligen Klemmeinheit aufweisen.

8. Vorrichtung nach einem der Ansprüche 4 bis 7, **dadurch gekennzeichnet, dass**
die Klemmbacken (9) in den innenliegenden Keilen (13) in Achsenrichtung des Zugelements (7) verschiebbar sind, wobei die Verschiebbarkeit durch Anschlagflächen (19,29) der innenliegenden Keile (13) begrenzt ist.

9. Vorrichtung nach einem der Ansprüche 1 bis 8, **dadurch gekennzeichnet, dass**
die Klemmbacken (9) mit koaxial zum Zugelement (7) leicht abgerundeten Einlagen (10) versehen sind, deren Material an den Kontaktflächen weicher ist als das des Zugelementes in seinem peripherischen Bereich.

10. Vorrichtung nach einem der Ansprüche 6 und 7, **dadurch gekennzeichnet, dass**
das Innenrohr (17) bzw. die Innenrohre (17') und der Betätigungsflansch (4) des Gehäuses (3) an mehrere Hydraulikzylinder (22 bzw. 28 und 23) koppelbar sind, die in bzw. gegen die Zugrichtung (Z) des Zugelementes (7) wirksam sind.

11. Vorrichtung nach Anspruch 10, **dadurch gekennzeichnet, dass** die Hydraulikzylinder (22) zum Betätigen des Innenrohres (17) auf einer stirnseitigen Halterung (21) des Gehäuses (3) abgestützt sind.

12. Vorrichtung nach Anspruch 19, **dadurch gekennzeichnet, dass** die Hydraulikzylinder (28) zum Betätigen der Innenrohre (17') auf benachbarten Haltern (8) der jeweiligen Klemmeinheit abgestützt sind.

13. Vorrichtung nach Anspruch 10, **dadurch gekennzeichnet, dass** die Hydraulikzylinder (23) zum Betätigen des Gehäuses (3) in einem externen Fundament oder Stützlager (24) verankert sind.

14. Vorrichtung nach Anspruch 1, **dadurch gekennzeichnet, dass** das Gehäuse und die Klemmeinheiten der Vorrichtung in einer in Längsrichtung zum Seil in vorzugsweise zwei halbschalenförmige Hälften geteilt und auf der einen Aussenseite des Gehäuses vorzugsweise Scharniere für das Aufklappen bzw. Verschliessen desselben vorgesehen sind.
